# EUROPÄISCHE PATENTSCHRIFT

(11) **EP 3 577 080 B1**
(45) Veröffentlichungstag und Bekanntmachung des Hinweises auf die Patenterteilung: **06.01.2021**
(21) Anmeldenummer: 17786817.1
(22) Anmeldetag: 28.09.2017
(51) Int. Cl.: C02F 1/52, C02F 11/12, C05F 7/00, C02F 1/66, C02F 11/14

(54) **VERFAHREN ZUM ABTRENNEN VON MAGNESIUM-AMMONIUM-PHOSPHAT AUS FAULSCHLAMM EINER KLÄRANLAGE SOWIE VORRICHTUNG HIERFÜR**
METHOD FOR SEPARATING MAGNESIUM AMMONIUM PHOSPHATE FROM SLUDGE OF A TREATMENT PLANT, AND DEVICE FOR THIS PURPOSE
PROCÉDÉ DE SÉPARATION DE PHOSPHATE DE MAGNÉSIUM-AMMONIUM DE LA BOUE DE PUTRÉFACTION D'UNE STATION D'ÉPURATION ET DISPOSITIF CORRESPONDANT

(30) Priorität: 30.09.2016 AT 23216 U
(43) Veröffentlichungstag der Anmeldung: 11.12.2019
(73) Patentinhaber: Applied Chemicals Handels-GmbH, 1147 Wien (AT)
(72) Erfinder: EITZENBERGER, Armin, 7203 Wiesen (AT); STRECKER, Dietmar, 2603 Felixdorf (AT); ZABL, Manfred, 1140 Wien (AT)
(74) Vertreter: Cunow, Gerda
(86) Internationale Anmeldenummer: PCT/AT2017/000068
(87) Internationale Veröffentlichungsnummer: WO 2018/058159

(56) Entgegenhaltungen:
- EP-A1- 2 724 990
- DE-A1-102005 002 066
- DE-A1-102008 050 349
- JP-A- 2007 244 994

## Beschreibung

Die vorliegende Erfindung bezieht sich auf ein Verfahren zum Abtrennen von Magnesium-Ammonium-Phosphat aus Faulschlamm einer Kläranlage, bei welchem ein anaerober Faulschlamm einer Entwässerung unterworfen wird, einem bei der Entwässerung erhaltenen Filtrat ein Magnesiumsalz zugesetzt wird, Magnesium-Ammonium-Phosphat ausgefällt wird, und Magnesium-Ammonium-Phosphat-Kristalle vom Filtrat abgetrennt werden, sowie eine Vorrichtung zum Abtrennen von Magnesium-Ammonium-Phosphat aus Faulschlamm einer Kläranlage umfassend wenigstens einen Faulturm zur Ausbildung von anaerob stabilisiertem Faulschlamm, eine Entwässerungseinrichtung zur Abtrennung von Filtrat aus dem Faulschlamm sowie eine Fällungsanlage, zur Ausbildung von Magnesium-Ammonium.-Phosphat-Kristallen aus dem Filtrat unter Zugabe von MgCl₂ sowie eine Abtrenneinheit für ausgefällte Magnesium-Ammonium-Phosphat-Kristalle.

In Klärschlämmen sind neben einer Vielzahl von organischen Materialien, welche gegebenenfalls nach einer entsprechenden Aufbereitung wiederverwertet werden können, auch eine Vielzahl von anorganischen Materialien, wie gelöste Metallsalze enthalten, welche, wenn sie gemeinsam mit den organischen Materialien deponiert werden, zu einer Kontamination des Grundwassers und zu schädlichen Umwelteffekten führen können. Andererseits sind andere Bestandteile des Klärschlamms für lebende Systeme von essentieller Bedeutung, wie beispielsweise Phosphor. Jeder Klärschlamm enthält nicht unbeträchtliche Phosphatmengen und es wird heute der für die Lebendsysteme erforderliche Phosphor meist in Form von organischen Düngemitteln, insbesondere in Form von wasserlöslichen schnell für Pflanzen verfügbaren mineralischen Düngemitteln auf die landwirtschaftlichen Böden aufgebracht, wodurch die Ernteerträge üblicherweise stark gesteigert werden können.

Wird demgegenüber der Phosphor nicht aus dem Klärschlamm abgetrennt, sondern beispielsweise in Gewässer eingeleitet, kommt es zu einem stark erhöhten Wachstum der Pflanzen aufgrund von einer Überdüngung mit Phosphor. Aus diesem Grund ist es erforderlich, den Phosphor aus den Klärschlämmen sowie den Klärschlammfiltraten abzutrennen, um derartige Überdüngungen mit Sicherheit hintanhalten zu können.

Zur Abtrennung von Phosphor aus Klärschlamm ist bereits eine Mehrzahl von Verfahren bekannt und insbesondere die Überführung der im Faulprozess entstandenen wasserlöslichen Phosphat- oder Ammoniumionen in eine Satzform, welche nachträglich aus dem System abgetrennt werden kann, hat sich hierbei als günstig erwiesen.

Die DE 10 2008 050 349 B4 beschreibt ein Verfahren zur Ausfällung von Phosphor aus phosphatbelastetem Abwasser, bei welchem das Abwasser nach Durchlaufen einer anaeroben Stufe mit Luft versetzt wird und in einer Kristallisationsstufe mit Magnesiumchlorid versetzt wird, worauf Magnesium-Ammonium-Phosphat am Boden einer hierfür vorgesehenen Vorrichtung abgetrennt wird.

Aus der DE 10 2005 040 018 A1 ist ein Verfahren zur Abwasserbehandlung sowie eine zugehörige Vorrichtung bekannt geworden, bei welchen in Abwasser enthaltenes Phosphat durch Zusatz von MgCl₂ haltigem Meerwasser als Magnesium-Ammonium-Phosphat ausgefällt wird.

Weiterhin ist der DE 10 2005 002 066 A1 ein Verfahren zur Gewinnung von Phosphorsalzen, insbesondere Magnesium-Ammonium-Phosphat aus stabilisiertem Schlamm einer Kläranlage bekannt geworden. Bei diesem Verfahren wird der stabilisierte Schlamm in einem ersten Schritt entwässert, worauf Ammoniak, Wasser und/oder heißes Prozesswasser dem entwässerten, stabilisierten Schlamm zugesetzt wird und die in den zugesetzten Flüssigkeiten aufgelösten Phosphate aus dem phosphathaltigen Schlammwasser unter Zusatz einer metallionenhaltigen Verbindung ausgefällt werden.

Nachteilig an diesem Verfahren ist, dass zuerst eine Entwässerung des stabilisierten Schlamms stattfindet, worauf in das extrahierte Schlammwasser eine weitere Flüssigkeit, nämlich Ammoniakwasser zugesetzt wird und in der Folge erst durch Zusatz der metallionenhaltigen Verbindung aus dem Schlammwasser Struvit bzw. Magnesium-Ammonium-Phosphat ausgefällt werden kann, welches es in der Folge daraus abgetrennt wird.

Die vorliegende Erfindung zielt nun darauf ab, ein Verfahren und eine Vorrichtung zur Verfügung zu stellen, mit welchen das Abtrennen von Magnesium-Ammonium-Phosphat aus dem Klärschlamm ohne Zugabe von Ammoniakwasser und/oder heißem Prozesswasser sowie Zugabe anderer Basen erreicht werden kann.

Zur Lösung dieser Aufgabe ist das erfindungsgemäße Verfahren im Wesentlichen dadurch gekennzeichnet,
- dass ein pH-Wert des anaeroben Faulschlamms vor der Entwässerung durch Belüften des Faulschlamms, insbesondere Durchleiten von Luft durch den Faulschlamm auf einen basischen pH-Wert eingestellt wird,
- dass das bei der Entwässerung anfallende Filtrat mit einer wässerigen Magnesiumchlorid-Lösung, gegebenenfalls einer wässrigen MgCl₂-Suspension, enthaltend wenigstens 5 Gew.-% MgCl₂, gegebenenfalls bei gleichzeitiger Belüftung, versetzt wird, und dass ausgefällte Magnesium-Ammonium-Phosphat-Kristalle in eine Reinigungsstufe überführt werden und Verunreinigungen der gebildeten Magnesium-Ammonium-Phosphat-Kristalle mit Faulschlamm gegebenenfalls durch Waschen mit Wasser entfernt werden und die Magnesium-Ammonium-Phosphat-Kristalle ausgetragen werden. Indem, wie dies dem erfindungsgemäßen Verfahren entspricht, der pH-Wert des anaeroben Faulschlamms vor der Entwässerung durch Belüften des insbesondere Durchleiten von Luft durch den Faulschlamm auf einen basischen pH-Wert eingestellt wird, gelingt es einerseits, den Zusatz von Basen, wie das Einbringen von Ammoniak und/oder Laugen zu vermeiden und andererseits gelingt es mit einer derartigen Verfahrensführung, den Faulschlamm zu verflüssigen, wodurch er leichter bearbeitet werden kann, so dass eine Schlammentwässerung mit einem dünnflüssigen Flauschlamm vorgenommen werden kann, was insbesondere zu einer vollständigen Überführung der Phosphate in das Filtrat führt. Durch eine derartige Verfahrensführung wird nicht nur eine Vereinfachung des Verfahrens erzielt, sondern auch eine verbesserte Verfahrensführung und insbesondere eine Einsparung an beispielsweise Flockungshilfsmitteln erreicht.

Das Einbringen von Luft in den Faulschlamm bewirkt den Phasenübergang von in dem Faulschlamm enthaltenen CO₂, wodurch gleichzeitig der pH-Wert des Faulschlamms ansteigt und der Faulschlamm insgesamt basisch wird. Hierdurch werden einerseits bereits im Schlamm enthaltene Magnesiumionen in Struvit überführt und ausgefällt, wodurch eine Krustenbildung auf den Anlagenoberflächen vermieden werden kann und andererseits wird eine weitere Verflüssigung des Faulschlamms erzielt wodurch seine weitere Verarbeitung erleichtert wird.

Indem nach der Verflüssigung eine Entwässerung des Faulschlamms vorgenommen wird und das bei der Entwässerung anfallende Filtrat mit einer wässrigen Magnesiumchlorid-Lösung, gegebenenfalls einer Magnesiumchlorid-Suspension, enthaltend wenigstens 5 Gew.-% MgCl₂ und insbesondere keine weiteren Salze, versetzt wird, gelingt es, die in dem Faulschlamm enthaltenen Phosphate ebenso wie den Ammoniak in Magnesium-Ammonium-Phosphat überzuführen und auszufällen, worauf in weiterer Folge die ausgefällten Magnesium-Ammonium-Phosphat-Kristalle in eine Reinigungsstufe überführt werden und die Verunreinigungen gegebenenfalls durch Waschen mit Wasser entfernt werden und die gewonnenen Magnesium-Ammonium-Phosphat-Kristalle getrocknet werden. Diese können in der Folge aufgrund ihrer hohen Reinheit, z.B. unmittelbar als Düngemittel eingesetzt werden.

Um die Flüssigkeitsfracht des erfindungsgemäßen Verfahrens möglichst niedrig bzw. gering zu halten, ist das Verfahren dahingehend weitergebildet, dass die wässerige MgCl₂-Lösung in einer Konzentration von 5-30 Gew.-% MgCl₂, bevorzugt 15 - 28 Gew.-% MgCl₂, insbesondere 18 - 22 Gew.-% MgCl₂, zugesetzt wird. Indem eine 15 - 28 Gew.-%ige, insbesondere 18 - 22 Gew.-%ige Magnesiumchlorid-Lösung zugesetzt wird, werden die erforderlichen Magnesiumsalze möglichst hoch konzentriert zudosiert, so dass ein im Kreislauf führen von übermäßigen Flüssigkeitsmengen mit dem erfindungsgemäßen Verfahren jedenfalls vermieden wird. Gleichzeitig gelingt es durch Zusatz einer Magnesiumchlorid-Lösung unmittelbar das gewünschte Magnesium-Ammonium-Phosphat bzw. Struvit aus dem basischen Fitrat nahezu quantitativ auszufällen.

Ein besonders dünnflüssiger Faulschlamm oder auch Klärschlamm kann gemäß der vorliegenden Erfindung dadurch erhalten werden, dass mittels einer Belüftung der pH-Wert des anaeroben Faulschlamms vor der Entwässerung auf einen pH-Wert von > 7,4, insbesondere > 7,8 eingestellt wird. Durch das Einstellen des pH-Werts auf relativ schwach basische Bedingungen gelingt es in dieser Stufe des Verfahrens, Magnesiumionen gemeinsam mit vorhandenem Phosphat und Ammoniumionen auszufällen und gleichzeitig durch die Belüftung das CO₂ aus dem Faulschlamm auszutreiben, woraus das Anheben des pH-Werts resultiert, wodurch nicht nur eine Verflüssigung bzw. ein dünnflüssiger Faulschlamm erhalten wird, sondern überdies sichergestellt wird, dass durch ein teilweises Ausfällen der Phosphatverbindungen zu dem frühen Zeitpunkt ein Verkrusten der Anlage vermieden wird.

Um den pH-Wert des Faulschlamms vorab bzw. während der Ausfällung von Magnesium-Ammonium-Phosphat im basischen Bereich zu halten, wird das erfindungsgemäße Verfahren dahingehend weitergebildet, dass gleichzeitig mit der Zugabe der wässerigen Magnesiumchlorid-Lösung eine Belüftung des Filtrats, insbesondere ein Durchleiten von Luft durch das Filtrat vorgenommen wird. Mit einer derartigen Verfahrensführung gelingt es nicht nur, Magnesium-Ammonium-Phosphat möglichst quantitativ auszufällen, sondern auch ein besonders reines Produkt zu erhalten, welches gegebenenfalls noch weiter gereinigt werden kann, wenn das Verfahren, wie dies einer Weiterbildung des erfindungsgemäßen Verfahrens entspricht, so geführt wird, dass die durch Zusatz der wässrigen MgCl₂-Lösung zu dem Filtrat ausgefällten Magnesium-Ammonium-Phosphat-Kristalle mit Druckluft in die Reinigungsstufe überführt werden. Indem das ausgefällte Magnesium-Ammonium-Phosphat mit Druckluft in eine Reinigungsstufe überführt wird, wird es bereits beim Überführen von dem restlichen Filtrat aus der Faulschlammentwässerung befreit, so dass es in der Reinigungsstufe gegebenenfalls lediglich durch Abblasen bzw. durch Aufsprühen von Wasser oder Lauge gereinigt werden kann.

Gemäß einer Weiterbildung der Erfindung wird die Reinigung der Magnesium-Ammonium-Phosphat-Kristalle bzw. der Struvitkristalle in der Reingigungsstufe mit einer alkalischen Lösung, mit Wasser oder Nutzwasser, insbesondere kaltem Wasser vorgenommen. Bei Reinigung mit einer alkalischen Lösung, insbesondere einer Lauge kann der Reinheitsgrad des Struvits noch weiter erhöht werden. Demgegenüber ist die Reinigung mit Wasser die wirtschaftlich günstigere Variante.

Um die Verunreinigungen von den gebildeten Magnesium-Ammonium-Phosphat-Kristallen noch besser zu entfernen, ist das erfindungsgemäße Verfahren dahingehend weitergebildet, dass diese während des Besprühens mit Wasser in der Reinigungsstufe durchmischt werden. Durch eine derartige Durchmischung während des Besprühens mit Wasser oder mit einer alkalischen Lösung werden sämtliche an der Oberfläche der gebildeten Kristalle haftenden Reste des Faulschlamms bzw. des Faulschlammfiltrats abgespült, so dass das aus dem Faulschlamm gewonnene Struvit bzw. das Magnesium-Ammonium-Phosphat ein Produkt höchster Reinheit darstellt, welches beispielsweise unmittelbar als Düngemittel eingesetzt werden kann.

Die Erfindung zielt weiterhin auf eine Vorrichtung für die Abtrennung von Magnesium-Ammonium-Phosphat aus Faulschlamm einer Kläranlage ab, mit welcher ein besonders hoch reines Magnesium-Ammonium-Phosphat erhalten werden kann und bei welcher gleichzeitig der apparative Aufwand so weit als möglich reduziert ist.

Zur Lösung dieser Aufgabe ist die erfindungsgemäße Vorrichtung im Wesentlichen dadurch gekennzeichnet, dass zwischen dem wenigstens einen Faulturm und der Entwässerungseinrichtung eine Belüftungseinrichtung, insbesondere ein Belüftungsturm zwischengeschaltet ist, dass die Fällungsanlage zur Ausfällung von Magnesium-Ammonium-Phosphat-Kristallen aus dem Filtrat aus der Entwässerungseinrichtung als ein ein Wehr aufweisender Abscheider ausgebildet ist, welcher Abscheider gegebenenfalls mit einer Belüftungseinrichtung sowie gegebenenfalls mit einem weiteren Abscheider versehen ist, dass die Fällungsanlage weiterhin mit einem Heber, insbesondere Druckluftheber, zum Austrag von Magnesium-Ammonium-Phosphat-Kristallen versehen ist und dass der Heber mit einer Reinigungsstufe für die am Kopf der Fällungsanlage ausgetragenen Magnesium-Ammonium-Phosphat-Kristalle verbunden ist. Indem die Vorrichtung so ausgebildet ist, dass zwischen wenigstens einem Faulturm und der Entwässerungseinrichtung eine Belüftungseinrichtung zwischengeschaltet ist, kann eine Luftmenge bis zu etwa dem 10-Fachen der Beschickungsmenge aus dem Faulturm eingebracht werden, wodurch es gelingt, einerseits das CO₂, welches in dem Faulschlamm gelöst vorliegt, auszutreiben und dadurch den pH-Wert des Faulschlamms zu erhöhen und andererseits gelingt mit der Erhöhung des pH-Werts eine Verflüssigung und Homogenisierung des Faulschlamms, so dass auf große Pumpen und dgl. in der Vorrichtung verzichtet werden. Dadurch kann eine apparativ einfache Vorrichtung für die Abtrennung von Magnesium-Ammonium-Phosphat aus dem Faulschlamm zur Verfügung gestellt werden kann. Nachdem der Faulschlamm einer Entwässerung unterzogen wurde, was insbesondere deshalb einfach ist, da der Faulschlamm relativ dünnflüssig und homogen ist, wird das Filtrat aus der Entwässerung in einen Abscheider geleitet, welcher ein Wehr aufweist, wodurch Kurzschlussströmungen zwischen dem eingebrachten Filtratwasser sowie der gegebenenfalls eingetragenen Luft und der ebenfalls in diesen Behälter dosierten Metallsalzlösung vermieden werden. Indem Kurzschlussströmungen vermieden werden, wird eine innige Durchmischung sämtlicher Substanzen erzwungen, so dass eine nahezu quantitative Ausfällung von Magnesium-Ammonium-Phosphat-Kristallen aus dem Filtrat erreicht wird. Indem weiterhin die Fällungsanlage mit einem Heber, insbesondere einem Druckluftheber zum Austrag der gebildeten Magnesium-Ammonium-Kristalle versehen ist, gelingt es, die in Wasser unlöslichen Magnesium-Ammonium-Phosphat-Kristalle mit möglichst wenigen verunreinigenden Substanzen einer Nachbehandlung, insbesondere einer Reinigung bzw. Trocknung zu überführen.

Um eine besondere innige Durchmischung des Faulschlamms mit der Luft sicherzustellen, ist die erfindungsgemäße Vorrichtung dahingehend weitergebildet, dass ein Eintrag, insbesondere eine Lochplatte zum Einbringen einer Überschussmenge an Luft, insbesondere einer bis zu 10-fachen Überschussmenge an Luft in Bezug auf eine Beschickungsmenge mit Faulschlamm in m³/h im Bodenbereich der Belüftungseinrichtung vorgesehen ist. Mittels einer Lochplatte, die im Bodenbereich der Belüftungseinrichtung vorgesehen ist, gelingt eine innige Durchmischung des Faulschlamms mit Luft, wodurch einerseits das im Faulschlamm vorhandene CO₂ vollständig ausgetragen wird und der pH-Wert des gesamten eingetragenen Faulschlamms gleichmäßig auf Werte von etwa 7,4 bis 7,8 erhöht werden kann. Überdies wird mit einer derartigen Maßnahme eine Homogenisierung des Faulschlamms erreicht und ein erster Teil Magnesium-Ammonium-Phosphat ausgefällt.

Indem die einer Schlammentwässerung nachgeschaltete Fällungsanlage, wie dies einer Weiterbildung der Erfindung entspricht, mit einem Tauchrohr für den Eintrag der wässrigen Magnesiumchlorid-Lösung versehen ist, wird eine zwangsweise Durchmischung des Filtrats aus der Schlammentwässerung mit der Metallsalzlösung erreicht, so dass eine nahezu quantitative Ausfällung von Magnesium-Ammonium-Phosphat-Kristallen aus dem Filtrat erreicht werden kann.

Um auch in dieser Stufe den pH-Wert so hoch wie möglich zu halten und eine weitere Verbesserung der Fällung und der Durchmischung zu erreichen, ist die erfindungsgemäße Vorrichtung dahingehend weitergebildet, dass das Tauchrohr zum zusätzlichen Eintrag von Luft in die Fällungsanlage, als insbesondere konzentrisch angeordnete Rohre aufweisendes Tauchrohr ausgebildet ist. Durch Ausbildung eines Tauchrohrs mit konzentrisch angeordneten Rohren, durch welches Luft eingetragen wird, wird nicht nur die innige Durchmischung des Filtrats mit Luft und Magnesiumchlorid erreicht, sondern insbesondere gegebenenfalls noch vorhandenes CO₂ mit Sicherheit aus der Fällungsanlage ausgetrieben. Magnesiumchlorid wird bei dieser Ausbildung über ein zweites Tauchrohr zudosiert. Die Fällungsanlage kann hierbei als ein Behälter ausgebildet sein, welcher sich in Richtung zu seinem Boden insbesondere konzentrisch verjüngt, wodurch ein verbessertes Absetzen der gebildeten Magnesium-Ammonium-Phosphat-Kristalle gelingt und ein möglichst vollständiger Austrag mittels eines Hebers in eine nachfolgende Reinigungsstufe erzielt werden kann.

Gemäß einer Weiterbildung der Erfindung ist die Vorrichtung dahingehend weitergebildet, dass die Reinigungsstufe aus der Gruppe bestehend aus einem Pilgerschrittklassierer, einer Schneckenpresse oder einer Siebbandpresse gewählt ist, mit welchem die gebildeten Struvit-Kristalle sicher und zuverlässig gereinigt, eventuell getrocknet und aus dem System ausgetragen werden können.

Um eine besonders hohe Reinheit der gebildeten Magnesium-Ammonium-Phosphat- bzw. Struvit-Kristalle zu erreichen, ist die erfindungsgemäße Vorrichtung dahingehend weitergebildet, dass die Reinigungsstufe in wenigstens einem Teil ihres Volumens mit wenigstens einer Sprüheinrichtung, insbesondere wenigstens einem Sprühkopf zum Eintrag von Spülwasser oder Spüllauge versehen ist. Mittels einer Sprüheinrichtung gelingt es, mitgerissenes Filtrat aus der Fällung sicher von den Kristallen herunterzuwaschen, so dass ein hoch reines Magnesium-Ammonium-Phosphat aus dem System ausgetragen werden kann.

Die Erfindung wird nachfolgend anhand eines Ausführungsbeispiels sowie zugehöriger Figuren näher erläutert. In diesen zeigt:
Fig. 1 ein Blockdiagramm, welches die Einzelschritte zur Durchführung des erfindungsgemäßen Verfahrens zeigt,
Fig. 2 die wesentlichen Elemente einer Vorrichtung zur Durchführung des Verfahrens gemäß der Erfindung, und
Fig. 3 eine andere Variante der wesentlichen Elemente der Vorrichtung von Fig. 2.

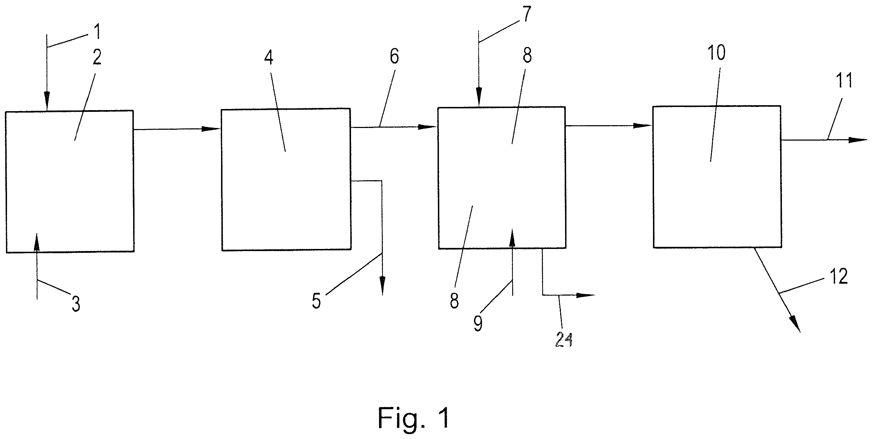

In Fig. 1 ist ein Blockdiagramm dargestellt, welches die Einzelschritte des Verfahrens zum Abtrennen von Magnesium-Ammonium-Phosphat aus Faulschlamm einer Kläranlage zeigt. Im Einzelnen wir bei 1 anaerob stabilisierter Faulschlamm einer Belüftungseinrichtung 2 zugeführt, in welcher er durch Eintrag von Luft bei 3 belüftet wird. Bei der Belüftung wird das in dem anaerob stabilisierte Faulschlamm enthaltende CO₂ ausgetrieben, wodurch der pH-Wert des Faulschlamms in den basischen Bereich ansteigt und insbesondere durch Wahl der Menge der zugeführten Luft auf einen Wert > 7,8 eingestellt wird. Hierfür ist es erforderlich, dass der anaerob stabilisierte Faulschlamm in der Einrichtung 2 zwischen zwei und vier Stunden, vorzugsweise 2,5 bis 3,5 Stunden verbleibt, eine Luftmenge in m³/h durch den anaerob stabilisierten Faulschlamm durchgeleitet wird, welche bis zu dem 10-fachen der Beschickungsmenge beträgt. Üblicherweise genügt jedoch für das Erreichen des Wunsch-pH-Werts im basischen Bereich die 3- bis 5-fache Luftmenge. Zusätzlich zu dem Austreiben des Kohlendioxids wird mit dieser Maßnahme einerseits eine Verflüssigung des anaerob stabilisierten Faulschlamms erreicht und eine spontane Kristallisation von unlöslichen Phosphatverbindungen, welche in dem Faulschlamm bereits enthalten sind, zu diesem Zeitpunkt begünstigt, so dass ein Verkrusten der Anlage vermieden werden kann.

Nachdem der gewünschte pH-Wert von > 7,4 vorzugsweise > 7,8 erreicht ist, wird der belüftete Faulschlamm aus der Belüftungseinrichtung 2 ausgetragen und einer Entwässerungseinrichtung 4 zugeführt, in welcher die Entwässerung des Faulschlamms vorgenommen wird. Bei der Entwässerung des Faulschlamms wird eine weitgehende Abtrennung der flüssigen Bestandteile vorgenommen, wobei der Schlamm beispielsweise in einer herkömmlichen Schneckenpresse entwässert werden kann. Bei der Trennung eine Fest- und Flüssigphase enthält die Flüssigphase Phosphat und Ammoniumionen, jedoch kaum Magnesiumionen, da diese bereits in der ersten Stufe während der Belüftung ausgefallen sind.

Bei der Schlammentwässerung gelingt es aufgrund der in der Belüftungseinrichtung 2 erfolgten Erniedrigung der Viskosität und Verflüssigung des anaerob stabilisierten Faulschlamms ein verbessertes Entwässerungsergebnis zu erreichen, was sich beispielsweise auch in der Verringerung der Zugabe von Flockungsmitteln, welche üblicherweise für das Entwässern zugesetzt werden müssen, niederschlägt.

In der Entwässerungseinrichtung 4 wird der feste Bestandteil des Faulschlamms bei 5 aus der Schlammentwässerung ausgetragen und das Filtrat bzw. die Flüssigphase des Faulschlamms bei 6 in eine Fällungsanlage 8 überführt. In dieser Fällungsanlage 8 wird das bei der Entwässerung erhaltene Filtrat bei 7 mit Magnesiumchlorid in Form einer wässrigen Lösung versetzt, wobei die wässrige Lösung eine Konzentration von 5 Gew.-% - 30 Gew.-% Magnesiumchlorid, bevorzugt 15 Gew.-% bis 28 Gew.-% Magnesiumchlorid, insbesondere 18 Gew.-% bis 22 Gew.-% Magnesiumchlorid aufweist. Die Verweilzeit des mit Magnesiumchlorid versetzten Filtrats in der Fällungsanlage 8 beträgt hierbei bis zu 3 Stunden, vorzugsweise etwa 2 bis 2,5 Stunden, wobei während dieser Zeit Magnesium-Ammonium-Phosphat-Kristalle aus dem Filtrat ausfällen und sich am Boden der Fällungsanlage 8 absetzen. Gemäß einer bevorzugten Ausbildung des erfindungsgemäßen Verfahrens wird zusätzlich in der Fällungsanlage 8 über 9 Luft eingebracht, um den pH-Wert des Filtrats wenn möglich im basischen Bereich zu halten. Auch in dieser Stufe beträgt die eingebrachte Menge Luft in m³/h bis zum 10-fachen der Beschickungsmenge, vorzugsweise jedoch das 3- bis 5 fache. Durch diese Belüftung wird ein Absinken des pH-Werts verhindert, wodurch es gelingt, Magnesium-Ammonium-Phosphat nahezu quantitativ aus dem Filtrat auszufällen. Auch könnte, wie dies einer Weiterbildung der Erfindung entspricht, zusätzlich ein Lamellenabscheider in der Anlage 8 vorhanden sein.

Mit dieser Verfahrensführung gelingt es, in der Fällungsanlage 8 Magnesium-Ammonium-Phosphat-Partikel zu erhalten, welche eine Dichte von etwa 1,5 bis 2,0 g/cm³ aufweisen und welche sich am Boden der Fällungsanlage 8 absetzen.

Gemäß dem erfindungsgemäßen Verfahren werden die am Boden abgesetzten Magnesium-Ammonium-Phosphat-Kristalle mittels eines Drucklufthebers, welcher in Fig. 1 nicht dargestellt ist, in eine Reinigungsstufe 10 überführt, in welcher Reinigungsstufe 10 die Magnesium-Ammonium-Phosphat-Kristalle mit Wasser und/oder einer alkalischen Lösung besprüht werden und so gereinigt werden. Die gereinigten Magnesium-Ammonium-Phosphat-Kristalle werden nach einer Trocknung, welche ebenfalls in der Reinigungsstufe 10 durchgeführt wird, bei 11 aus dem Verfahren ausgetragen ebenso wie bei 12 die bei der Trocknung und Reinigung anfallende Flüssigkeit ausgetragen wird. Mit einer derartigen Verfahrensführung gelingt es, hoch reine Magnesium-Ammonium-Phosphat-Kristalle zu erhalten, welche z.B. unmittelbar als Düngemittel eingesetzt werden können.

Eine derartige Verfahrensführung hat gegenüber herkömmlichen Verfahrensführungen eine Mehrzahl von Vorteilen. So gelingt es in der Belüftungseinrichtung 2 durch das Belüften des anaerob stabilisierten Faulschlamms eine Verflüssigung des Schlamms zu erreichen und gleichzeitig den pH-Wert des Schlamms anzuheben, wodurch bereits in dieser Stufe ein Teil des Magnesium-Ammonium-Phosphats ausgefällt wird, und zwar so lange, bis sämtliche Magnesiumionen, welche im Faulschlamm vorhanden waren, verbraucht sind. Das restliche Ammonium und Phosphat wird in der Folge in der Fällungsanlage ausgefällt und in die Entwässerung und die nachfolgenden Verfahrensschritte überführt und kann unmittelbar zur Düngemittelherstellung verwendet werden. Durch die Verflüssigung des Faulschlamms in der Belüftungseinrichtung und die Ausfällung in dieser Stufe von Magnesium-Ammonium-Phosphat bis sämtliche Magnesiumionen, welche im Faulschlamm vorhanden sind, verbraucht sind, wird eine Verkrustung der Behälterwände vermieden, so dass die Wartungsintervalle der Anlage deutlich erhöht werden können und die Störungsanfälligkeit der gesamten Anlage stark verringert werden kann. Schließlich gelingt es weiterhin, ein verbessertes Entwässerungsergebnis in der Entwässerungseinrichtung 4 zu erhalten, was in der Einsparung von Flockungshilfsmitteln resultiert. Schließlich wird mit einem derartigen Verfahren ein extrem reines Magnesium-Ammonium-Phosphat erhalten, welches unmittelbar zur Düngemittelherstellung bzw. als Düngemittel verwendet werden kann.

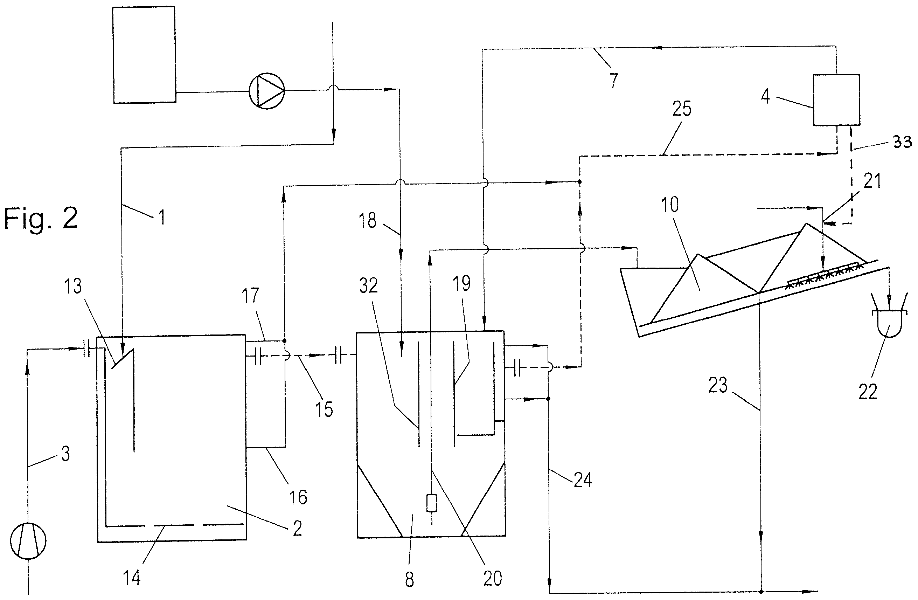

In Fig. 2 ist eine Ausführungsform einer erfindungsgemäßen Vorrichtung zur Durchführung des erfindungsgemäßen Verfahrens dargestellt, in welcher, soweit als möglich, die Bezugszeichen von Fig. 1 beibehalten wurden. Hierbei erfolgt bei 1 eine Aufgabe von Faulschlamm zu der Belüftungseinrichtung 2. Der Faulschlamm wir hierbei auf ein Prallblech 13 geleitet, um gegebenenfalls in diesem vorhandene Klumpen so weit als möglich zu zerkleinern. Gleichzeitig wird über eine im Bodenbereich der Einrichtung 2 vorgesehene Siebplatte 14 Luft in den Faulschlamm eingeleitet. Die Luft, welche durch die Siebplatte 14 eingebracht wird, wird hierbei über die Leitung 3 zugeführt. Durch die intensive Vermischung von Luft und Faulschlamm gelingt es dem Faulschlamm zu verflüssigen und den pH-Wert anzuheben. Wenn sich hierbei in der Einrichtung 2 beispielsweise an der Oberseite der Einrichtung 2 bereits ein Flüssigkeitsfilm bildet, kann dieser über die Leitung 15 direkt in die Fällungsanlage bzw. Kristallisationsstufe 8 eingeleitet werden. Ansonsten wird der verflüssigte Faulschlamm bei 16 und 17 aus der Einrichtung 2 abgezogen und einer mit 4 angedeuteten Schlammentwässerung zugeführt. Das Filtrat der Schlammentwässerung 4 wird in der Folge über Leitung 7 der Fällungsanlage 8 zugeführt. Die Fällungsanlage 8 ist hierbei so ausgebildet, dass sie in ihrem unteren Bereich konisch ausgebildet ist, um das Absetzen von gebildeten Magnesium-Ammonium-Phosphat-Kristallen zu begünstigen. Schließlich weist sie überdies ein Wehr 32 auf, um eine intensive Vermischung des Filtrats mit dem über Leitung 18 zugeführten Magnesiumchlorid in Form einer Magnesiumchlorid-Lösung zu erzwingen. In gleicher Weise kann ein weiteres Wehr auf der Seite des Filtrateintrags vorgesehen sein, wie dies schematisch mit 19 angedeutet ist.

In der Fällungsanlage 8 erfolgt eine Vermischung des Filtrats mit der Magnesiumchlorid-Lösung, wodurch Magnesium-Ammonium-Phosphat-Kristalle gebildet werden, welche in der Folge nach ihrem Absetzen am Boden der Anlage 8 mittels eines Drucklufthebers 20 der Reinigungsstufe 10, welche hier als Pilgerschrittklassierer ausgebildet ist, zugeführt. Über Leitung 21 wird in den Pilgerschrittklassierer Spülwasser oder Lauge bzw. Filtrat über Leitung 33 eingetragen, welche(s) über Sprühdüsen auf die Struvit-Kristalle aufgebracht wird, um diese weiter zu reinigen. Die gereinigten Kristalle werden bei 22 aus dem Klassierer 10 ausgetragen, ebenso wie anfallende Flüssigkeit bei 23 ausgetragen wird und mit aus der Reinigungsstufe 10 abgezogenem Zentrat 24 vereinigt wird und der Kläranlage rückgeführt wird.

In gleicher Weise können feste Bestandteile, welche bei der Kristallisation gegebenenfalls noch anfallen, über Leitung 25 der Schlammentwässerung 4 zugeführt werden.

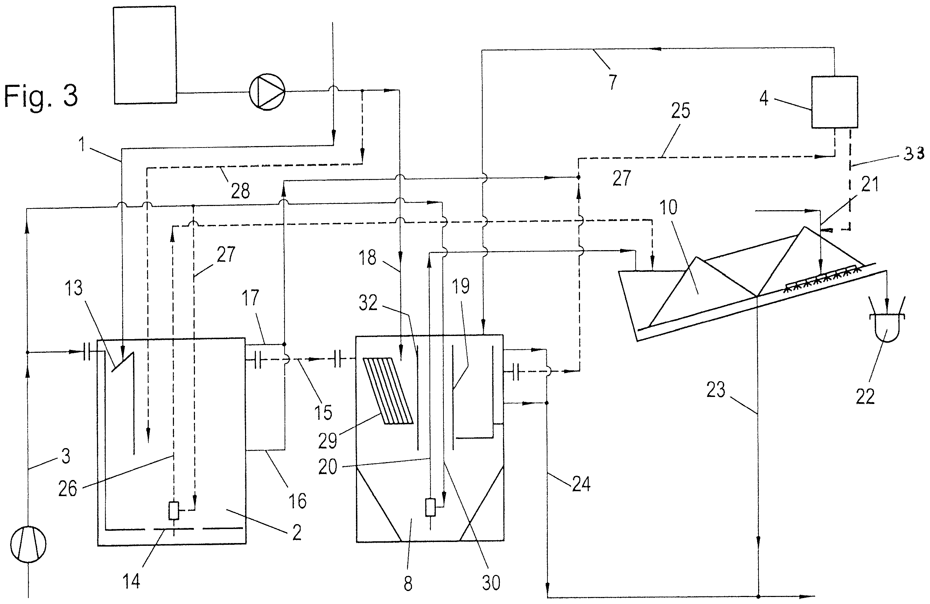

In Fig. 3 ist eine Weiterbildung der Vorrichtung von Fig. 2 dargestellt, in welcher nur mehr jene Schritte erläutert werden, welche in Fig. 2 nicht beschrieben sind. So Kann bereits in der Belüftungseinrichtung 2 ein Druckluftheber 26 vorgesehen sein, um in dieser Stufe ausgefällte Struvit-Kristalle unmittelbar dem Pilgerschrittklassierer 10 zuzuführen, wie dies mit der strichlierten Linie 26 dargestellt ist. Die für den Druckluftheber 26 erforderlich Luft wir hierbei über eine Zweigleitung der Luftleitung 3, welche mit 27 bezeichnet ist, zugeführt. Um bereits in dieser Stufe möglichst viele Magnesium-Ammonium-Phosphat-Kristalle bzw. Stuvit-Kristalle auszufällen, kann, wie dies ebenfalls mit strichlierter Linie 28 dargestellt ist, bereits in diese Stufe ein Teil der Magnesiumchlorid-Lösung eingebracht werden.

Ebenso kann, wie der Druckluftheber 26 in der Belüftung 2 mit einer eigenen Luftleitung 27 versehen ist, auch der Druckluftheber 20 mit einer eigenen Luftleitung 30 versehen sein. Um ein möglichst vollständiges Abscheiden der Magnesium-Ammonium-Phosphat-Kristalle in der Fällungsanlage 8 zu erreichen, ist zusätzlich ein Lamellenabscheider 29 vorgesehen.

Mit einer derartigen Vorrichtung gelingt es, hoch reines Magnesium-Ammonium-Phosphat zu erhalten, welches unmittelbar als Düngemittel eingesetzt werden kann.

## Patentansprüche

1. Verfahren zum Abtrennen von Magnesium-Ammonium-Phosphat aus Faulschlamm einer Kläranlage, bei welchem
a. ein anaerober Faulschlamm einer Entwässerung (4) unterworfen wird,
b. einem bei der Entwässerung (4) erhaltenen Filtrat ein Magnesiumsalz zugesetzt wird und Magnesium-Ammonium-Phosphat ausgefällt wird, und
c. Magnesium-Ammonium-Phosphat-Kristalle vom Filtrat abgetrennt werden,
**dadurch gekennzeichnet**
- **dass** ein pH-Wert des anaeroben Faulschlamms vor der Entwässerung (4) durch Belüften des Faulschlamms auf einen basischen pH-Wert eingestellt wird,
- **dass** das bei der Entwässerung (4) anfallende Filtrat mit einer wässerigen Magnesiumchlorid-Lösung, gegebenenfalls einer wässrigen MgCl₂-Suspension, enthaltend wenigstens 5 Gew-% MgCl₂, gegebenenfalls bei gleichzeitiger Belüftung, versetzt wird, und dass ausgefällte Magnesium-Ammonium-Phosphat-Kristalle in eine Reinigungsstufe (10) überführt werden und Verunreinigungen der gebildeten Magnesium-Ammonium-Phosphat-Kristalle mit Faulschlamm gegebenenfalls durch Waschen mit Wasser entfernt werden und die Magnesium-Ammonium-Phosphat-Kristalle ausgetragen werden.

2. Verfahren nach Anspruch 1, **dadurch gekennzeichnet, dass** die wässerige MgCl₂-Lösung in einer Konzentration von 5-30 Gew.-% MgCl₂, bevorzugt 15 - 28 Gew.-% MgCl₂, insbesondere 18 - 22 Gew.-% MgCl₂, zugesetzt wird.

3. Verfahren nach Anspruch 1 oder 2, **dadurch gekennzeichnet, dass** der pH-Wert des anaeroben Faulschlamms vor der Entwässerung durch Belüften auf einen pH- Wert von > 7,4, insbesondere > 7,8 eingestellt wird.

4. Verfahren nach Anspruch 1, 2 oder 3, **dadurch gekennzeichnet, dass** gleichzeitig mit der Zugabe der wässerigen Magnesiumchlorid-Lösung eine Belüftung des Filtrats vorgenommen wird.

5. Verfahren nach einem der Ansprüche 1 bis 4, **dadurch gekennzeichnet, dass** die durch Zusatz der wässrigen MgCl₂-Lösung zu dem Filtrat ausgefällten Magnesium-Ammonium-Phosphat-Kristalle mit Druckluft in die Reinigungsstufe (10) überführt werden.

6. Verfahren nach einem der Ansprüche 1 bis 5, **dadurch gekennzeichnet, dass** die Magnesium-Ammonium-Phosphat-Kristalle in der Reinigungsstufe (10) mit einer alkalischen Lösung, Wasser, Nutzwasser oder Filtratwasser, insbesondere kaltem Wasser gereinigt werden.

7. Verfahren nach Anspruch 6, **dadurch gekennzeichnet, dass** die gebildeten Magnesium-Ammonium-Phosphat-Kristalle während des Besprühens mit Wasser in der Reinigungsstufe (10) durchmischt werden.

8. Vorrichtung zum Abtrennen von Magnesium-Ammonium-Phosphat aus Faulschlamm einer Kläranlage umfassend wenigstens einen Faulturm zur Ausbildung von anaerob stabilisiertem Faulschlamm, eine Entwässerungseinrichtung (4) zur Abtrennung von Filtrat aus dem Faulschlamm sowie eine Fällungsanlage (8), zur Ausbildung von Magnesium-Ammonium-Phosphat-Kristallen aus dem Filtrat unter Zugabe von MgCl₂ sowie einer Abtrenneinheit für ausgefällte Magnesium-Ammonium-Phosphat-Kristalle, **dadurch gekennzeichnet, dass** zwischen dem wenigstens einen Faulturm und der Entwässerungseinrichtung (4) eine Belüftungseinrichtung (2), insbesondere ein Belüftungsturm zwischengeschaltet ist, dass die Fällungsanlage (8) zur Ausfällung von Magnesium-Ammonium-Phosphat-Kristallen aus dem Filtrat aus der Entwässerungseinrichtung (4) als ein Wehr (17, 19) aufweisender Abscheider ausgebildet ist, welcher Abscheider gegebenenfalls mit einer Belüftungseinrichtung sowie gegebenenfalls mit einem weiteren Abscheider versehen ist, dass die Fällungsanlage (8) weiterhin mit einem Heber (20), insbesondere Druckluftheber, zum Austrag von Magnesium-Ammonium-Phosphat-Kristallen versehen ist und dass der Heber (20) mit einer Reinigungsstufe (10) für die am Kopf der Fällungsanlage (8) ausgetragenen Magnesium-Ammonium-Phosphat-Kristalle verbunden ist.

9. Vorrichtung nach Anspruch 8, **dadurch gekennzeichnet, dass** ein Eintrag, insbesondere eine Lochplatte (14) zum Einbringen einer Überschussmenge an Luft, insbesondere einer bis zu 10-fachen Überschussmenge an Luft in Bezug auf eine Beschickungsmenge an Faulschlamm in m³/h im Bodenbereich der Belüftungseinrichtung vorgesehen ist.

10. Vorrichtung nach Anspruch 8 oder 9, **dadurch gekennzeichnet, dass** die Fällungsanlage (8) mit einem Tauchrohr (18) für den Eintrag der wässerigen MgCl₂-Lösung versehen ist.

11. Vorrichtung nach Anspruch 10, **dadurch gekennzeichnet, dass** das Tauchrohr (18) zum zusätzlichen Eintrag von Luft in Fällungsanlage (8), insbesondere als ein konzentrisch angeordnete Rohre aufweisendes Tauchrohr (18) ausgebildet ist.

12. Vorrichtung nach Anspruch 8, 9 oder 10, **dadurch gekennzeichnet, dass** die Reinigungsstufe (10) aus der Gruppe bestehend aus einem Pilgerschrittklassierer, einer Schneckenpresse oder einer Siebbandpresse gewählt ist.

13. Vorrichtung nach Anspruch 12, **dadurch gekennzeichnet, dass** die Reinigungsstufe (10) in wenigstens einem Teil ihres Volumens mit wenigstens einer Sprüheinrichtung (21), insbesondere wenigstens einem Sprühkopf zum Eintrag von Spülwasser versehen ist.

## Claims

1. A method for separating magnesium ammonium phosphate from sludge in a treatment plant in which
a. anaerobic sludge undergoes dewatering (4),
b. a magnesium salt is added to a filtrate obtained following dewatering (4) and magnesium ammonium phosphate is precipitated, and
c. magnesium ammonium phosphate crystals are separated from the filtrate,
**characterized in that**
- a pH value of the anaerobic sludge is adjusted prior to dewatering (4) by aerating the sludge to a basic pH value,
- the filtrate occurring during dewatering (4) is mixed with an aqueous magnesium chloride solution, where appropriate an aqueous MgCl₂ suspension, containing at least 5 % by wt. MgCl₂, where appropriate with simultaneous aeration, and precipitated magnesium ammonium phosphate crystals are transferred to a cleaning stage (10) and impurities are removed from the formed magnesium ammonium phosphate crystals with sludge, where necessary by washing with water, and the magnesium ammonium phosphate crystals are discharged.

2. The method according to claim 1, **characterized in that** the aqueous MgCl₂ solution is added in a concentration of 5 - 30 % by wt. MgCl₂, preferably 15 - 28 % by wt. MgCl₂, particularly 18 - 22 % by wt. MgCl₂.

3. The method according to claim 1 or 2, **characterized in that** the pH value of the anaerobic sludge is adjusted prior to dewatering through aeration to a pH value > 7.4, in particular > 7.8.

4. The method according to claim 1, 2 or 3, **characterized in that** aeration of the filtrate takes place simultaneously with the addition of the aqueous magnesium chloride solution.

5. The method according to one of claims 1 to 4, **characterized in that** the magnesium ammonium phosphate crystals precipitated through the addition of the aqueous MgCl₂ solution to the filtrate are transferred to the cleaning stage (10) using compressed air.

6. The method according to one of claims 1 to 5, **characterized in that** the magnesium ammonium phosphate crystals are cleaned in the cleaning stage (10) using an alkaline solution, water, industrial water or filtrate water, in particular cold water.

7. The method according to claim 6, **characterized in that** the magnesium ammonium phosphate crystals formed are stirred in the cleaning stage (10) while being sprayed with water.

8. A device for separating magnesium ammonium phosphate from sludge in a treatment plant comprising at least one digester for forming anaerobically stabilized sludge, a dewatering device (4) for separating filtrate from the sludge and a precipitation system (8) for forming magnesium ammonium phosphate crystals from the filtrate with the addition of MgCl₂ and a separating unit (10) for precipitated magnesium ammonium phosphate crystals, **characterized in that** an aerating device (2), in particular an aerating tower, is inserted between the at least one digester and the dewatering device (4), that the precipitation system (8) is designed for the precipitation of magnesium ammonium phosphate crystals from the filtrate from the dewatering device (4) as a separator comprising a weir (17, 19), which separator is provided with an aeration device where necessary and with a further separator where necessary, that the precipitation system (8) is furthermore provided with a siphon (20), in particular a compressed air lifter, for delivering magnesium ammonium phosphate crystals, and that the lifter (20) is connected to a cleaning stage (10) for the magnesium ammonium phosphate crystals discharged at the top of the precipitation plant (8).

9. The device according to claim 8, **characterized in that** an entry, in particular a perforated plate (14), is provided for introducing an excess amount of air, in particular up to 10 times an excess amount of air, with respect to a feed quantity of sludge in m³/hr in the bottom region of the aeration device.

10. The device according to claim 8 or 9, **characterized in that** the precipitation plant (8) is provided with an immersion pipe (18) for entry of the aqueous MgCl₂ solution.

11. The device according to claim 10, **characterized in that** the immersion pipe (18) is designed for the additional entry of air in the precipitation plant (8), in particular as an immersion pipe (18) comprising concentrically arranged pipes.

12. The device according to claim 8, 9 or 10, **characterized in that** the cleaning stage (10) is selected from the group comprising a pilger step classifier, a screw press or a screen belt press.

13. The device according to claim 12, **characterized in that** the cleaning stage (10) is provided in at least part of its volume with at least one spray device (21), in particular at least one spray head for introducing rinsing water.

## Revendications

1. Procédé de séparation de phosphate de magnésium-ammonium de boue de putréfaction d'une station d'épuration, dans lequel
a. une boue de putréfaction anaérobie est soumise à une déshydratation (4),
b. un sel de magnésium est ajouté à un filtrat obtenu lors de la déshydratation (4) et du phosphate de magnésium-ammonium est précipité, et
c. des cristaux de phosphate de magnésium-ammonium sont séparés du filtrat,
**caractérisé en ce**
- **qu'**une valeur de pH de la boue de putréfaction anaérobie est réglée avant la déshydratation (4) par aération de la boue de putréfaction sur une valeur de pH basique,
- **que** le filtrat produit lors de la déshydratation (4) est mélangé à une solution de chlorure de magnésium aqueuse, éventuellement à une suspension de MgCl₂ aqueuse, contenant au moins 5 % en poids de MgCl₂, éventuellement lors d'une aération simultanée et que des cristaux de phosphate de magnésium-ammonium précipités sont transférés dans un étage de nettoyage (10) et des impuretés des cristaux de phosphate de magnésium-ammonium formés sont éliminées avec de la boue de putréfaction éventuellement par lavage à l'eau et les cristaux de phosphate de magnésium-ammonium sont déchargés.

2. Procédé selon la revendication 1, **caractérisé en ce que** la solution de MgCl₂ aqueuse est ajoutée en une concentration de 5 - 30 % en poids de MgCl₂, de manière préférée 15 - 28 % en poids de MgCl₂, en particulier 18 - 22 % en poids de MgCl₂.

3. Procédé selon la revendication 1 ou 2, **caractérisé en ce que** la valeur pH de la boue de putréfaction anaérobie est réglée avant la déshydratation par aération sur une valeur de pH de > 7,4, en particulier > 7,8.

4. Procédé selon la revendication 1, 2 ou 3, **caractérisé en ce qu'**une aération du filtrat est réalisée simultanément avec l'ajout de la solution de chlorure de magnésium aqueuse.

5. Procédé selon l'une des revendications 1 à 4, **caractérisé en ce que** les cristaux de phosphate de magnésium-ammonium précipités par ajout de la solution de MgCl₂ aqueuse au filtrat sont transférés avec de l'air comprimé dans l'étage de nettoyage (10).

6. Procédé selon l'une des revendications 1 à 5, **caractérisé en ce que** les cristaux de phosphate de magnésium-ammonium sont nettoyés dans l'étage de nettoyage (10) avec une solution alcaline, de l'eau, de l'eau usée ou de l'eau de filtrat, en particulier de l'eau froide.

7. Procédé selon la revendication 6, **caractérisé en ce que** les cristaux de phosphate de magnésium-ammonium formés sont mélangés en totalité dans l'étage de nettoyage (10) à de l'eau pendant la pulvérisation.

8. Dispositif de séparation de phosphate de magnésium-ammonium de boue de putréfaction d'une station d'épuration comprenant au moins une tour de digestion pour réaliser de la boue de putréfaction stabilisée par anaérobie, un système de déshydratation (4) pour la séparation de filtrat de la boue de putréfaction, ainsi qu'une installation de précipitation (8), pour réaliser des cristaux de phosphate de magnésium-ammonium à partir du filtrat en ajoutant du MgCl₂ ainsi qu'une unité de séparation pour des cristaux de phosphate de magnésium-ammonium précipités, **caractérisé en ce qu'**un système d'aération (2), en particulier une tour d'aération, est intercalé entre l'au moins une tour de digestion et le système de déshydratation (4), que l'installation de précipitation (8) pour précipiter des cristaux de phosphate de magnésium-ammonium à partir du filtrat provenant du système de déshydratation (4) est réalisée en tant qu'un séparateur présentant un barrage (17, 19), lequel séparateur est pourvu éventuellement d'un système d'aération ainsi qu'éventuellement d'un autre séparateur, que l'installation de précipitation (8) est pourvue par ailleurs d'un vérin (20), en particulier d'un vérin à air comprimé, pour la décharge de cristaux de phosphate de magnésium-ammonium, et que le vérin (20) est relié à un étage de nettoyage (10) pour les cristaux de phosphate de magnésium-ammonium déchargés sur la tête de l'installation de précipitation (8).

9. Dispositif selon la revendication 8, **caractérisé en ce qu'**une entrée, en particulier une plaque perforée (14) pour introduire une quantité excessive d'air, en particulier jusqu'à 10 fois la quantité excessive d'air par rapport à une quantité de chargement en boue de putréfaction en m³/h, est prévue dans la zone de fond du système d'aération.

10. Dispositif selon la revendication 8 ou 9, **caractérisé en ce que** l'installation de précipitation (8) est pourvue d'un tube plongeur (18) pour l'entrée de la solution de MgCl₂ aqueuse.

11. Dispositif selon la revendication 10, **caractérisé en ce que** le tube plongeur (18) est réalisé aux fins de l'entrée supplémentaire d'air dans l'installation de précipitation (8), en particulier en tant qu'un tuyau plongeur (18) présentant des tuyaux disposés de manière concentrique.

12. Dispositif selon la revendication 8, 9 ou 10, **caractérisé en ce que** l'étage de nettoyage (10) est choisi parmi le groupe constitué d'un classificateur à pas de pèlerin, d'une presse à vis sans fin ou d'une presse à bandes filtrantes.

13. Dispositif selon la revendication 12, **caractérisé en ce que** l'étage de nettoyage (10) est pourvu dans au moins une partie de son volume d'au moins un système de pulvérisation (21), en particulier d'au moins une tête de pulvérisation pour faire entrer de l'eau de rinçage.
